# EUROPEAN PATENT SPECIFICATION

(11) **EP 2 197 327 B1**
(45) Date of publication and mention of the grant of the patent: **08.01.2014**
(21) Application number: 08807509.8
(22) Date of filing: 03.09.2008
(51) Int. Cl.: A47J 27/06

(54) **A METHOD OF MANUFACTURING A VESSEL FOR COOKING FOOD, AND A VESSEL THUS OBTAINED**
VERFAHREN ZUR HERSTELLUNG EINES NAHRUNGSMITTELGARGEFÄSSES UND DAMIT ERHALTENES GARGEFÄSS
PROCEDE DE FABRICATION D'UN RECIPIENT DE CUISSON D'ALIMENTS ET RECIPIENT AINSI OBTENU

(30) Priority: 11.09.2007 IT TO20070637
(43) Date of publication of application: 23.06.2010
(73) Proprietor: B & C S.R.L., 40134 Bologna (IT)
(72) Inventor: FOGACCI, Pietro, I-40134 Bologna (IT)
(74) Representative: Robba, Pierpaolo
(86) International application number: PCT/IB2008/053556
(87) International publication number: WO 2009/034500

(56) References cited:
- EP-A- 1 172 053
- CH-A- 167 463
- GB-A- 543 071
- US-B1- 6 320 166
- US-B1- 6 698 337

## Description

The present invention relates to a method of manufacturing a vessel for cooking food, and to a vessel thus obtained.

In the field of cooking foodstuffs, in particular foodstuffs with a partially liquid content, three main kinds of vessels can substantially be distinguished.

A first kind of vessel, which can be defined as a "traditional" vessel, has a metal bottom which is put directly in contact with the heat source, for instance the flame of a gas ring or an electric hot plate, and on which the food to be cooked is placed.

In a second kind of vessel, intended for steaming, the space between the metal bottom of the vessel, which is in contact with the heat source, and the food, which is placed onto a horizontal grid inside the vessel, is filled with water.

A third kind of vessel, intended for cooking under pressure and known as "pressure cooker", exploits the principle known as the first law of ebullition, according to which the boiling temperature can be increased by increasing the ambient pressure that, in the particular case of the air-tight pressure cooker, is the pressure within the pressure cooker itself.

In vessels of the first kind, i.e. for traditional cooking, food, which is directly in contact with the metal bottom of the vessel exposed to the heat source, reaches a temperature that can exceed 250°C, with the risk that the food molecules can be at least partially burnt. Such a phenomenon causes an undesired alteration of the characteristics of the food, in particular of its nutritional value.

In steamers, food loses a lot of the mineral salts, the vitamins and the other water-soluble nourishing substances because of the prolonged and continuous direct contact with steam. Also in this case therefore the undesired alteration of the characteristics of the food takes place.

Lastly, in pressure cookers the high temperature reached inside the cooker, typically 108 - 120°C, damages or destroys the most delicate substances such as vitamins and enzymes, and moreover the risk still exists that small particles of food burn in the portion in contact with the metal bottom.

The invention concerns a fourth kind of vessel for cooking food, of the kind exploiting the cooking principle referred to as indirect steaming with automatic temperature control.

Said cooking system and a corresponding vessel are disclosed for instance in the Patent for Utility Model IT-247485 in the name of the Applicant.

The term "indirect steaming with automatic temperature control" generally refers to cooking food in suitable vessels where a water-containing hollow space is interposed between the heat source, for instance a gas ring or an electric hot plate, and the food.

The pressure of steam generated inside the hollow space due to water heating is adjusted by a control valve, which is generally located on the vessel wall and is calibrated so as to prevent the burst of the walls of the hollow space and to keep the temperature inside the vessel constant, at a value of about 105°C.

Said cooking system improves the food quality in that it avoids burning and the consequent alterations. Vitamins, enzymes and nourishing substances do not suffer from detrimental alterations, mineral salts are not dispersed, oils and fats do not fry, do not burn and are not transformed into harmful substances, with clear advantages for health.

Since food, in accordance with such a cooking system, is isolated from direct contact with the heat source and is not in contact with steam, the wealth of the natural flavours is maintained and food is tastier, more natural and digestible and lighter.

For the same reason, when using said cooking system, it is not necessary to frequently stir food, nor is necessary to add water, since food does not burn nor it sticks on the walls or the bottom of the vessel.

Moreover, the constant temperature, typically of about 105°C, inside the vessel can be maintained also by means of a small heat source, with consequent energy saving.

Of course, manufacturing a vessel for indirect steaming with automatic temperature control is more complex than manufacturing a traditional vessel.

Actually, in the first case, it is necessary to define a sufficiently robust hollow space for water and to equip it with a valve calibrated so as to keep the temperature inside the vessel constant, thereby avoiding its burst.

According to the prior art, the hollow space is defined by joining along their edges two cylindrical bodies of sheet steel concentrically arranged into each other. Both cylindrical bodies are closed at their bottom and open at their top and they have slightly different sizes so that, once they are joined together, the inner body is spaced apart from the outer body in correspondence of the walls and the bottom, thereby defining the corresponding hollow space.

A valve for adjusting the steam pressure in the hollow space is provided on the side of the outer body and it can be removed in order to fill the hollow space with water.

Generally a steel plate is externally secured onto the bottom of the outer body in order to define a corresponding bearing surface for the vessel.

It is therefore a first object of the invention to provide a method of manufacturing a vessel for cooking food, in particular for cooking food according to the system of indirect steaming with automatic temperature control, which method is simple and cheap and enables obtaining a vessel with high structural and aesthetic quality.

Recently, so-called induction cooking plates, in which heat is generated by a magnetic field generated by induction coils, have become widely used. The cooking plate remains cold, thereby minimising consumptions and enabling attaining and maintaining the temperature in very short times. In this case however use of a pan with a suitable bottom (of iron or steel/iron) is necessary.

It is another object of the present invention to provide a method of manufacturing a vessel for cooking food, of the kind exploiting the system of indirect steaming with automatic temperature control, which vessel can be used also on induction cooking plates.

It is a further object of the invention to provide a method of manufacturing a vessel of the above kind, in which the device for adjusting the steam pressure in the hollow space can be easily mounted, removed and replaced.

The above and other objects are achieved by the method and the vessel as claimed in the appended claims.

Advantageously, according to the invention, it is possible to obtain in simple and cheap manner a vessel for cooking food, in particular for cooking food according to the system of indirect steaming with automatic temperature control, which vessel has improved structural and aesthetic qualities.

Moreover, always related to the invention, the vessel can be employed on induction cooking plates.

Advantageously, related to the invention, the pressure adjusting device can be applied to the vessel easily and with the correct orientation; moreover, the valve can be easily mounted and removed during the usual operations of filling the hollow space.

A detailed description of the invention will be provided hereinafter with reference to the accompanying drawings, in which:
- Fig. 1 is a longitudinal cross-sectional view of the vessel according to the invention,
- Fig. 2 is an enlarged view of a detail of the vessel according to a first embodiment;
- Figs. 3a and 3b are enlarged views of a detail of the vessel in respective manufacturing steps, according to a second embodiment, not forming part of the invention such as defined by the claims.

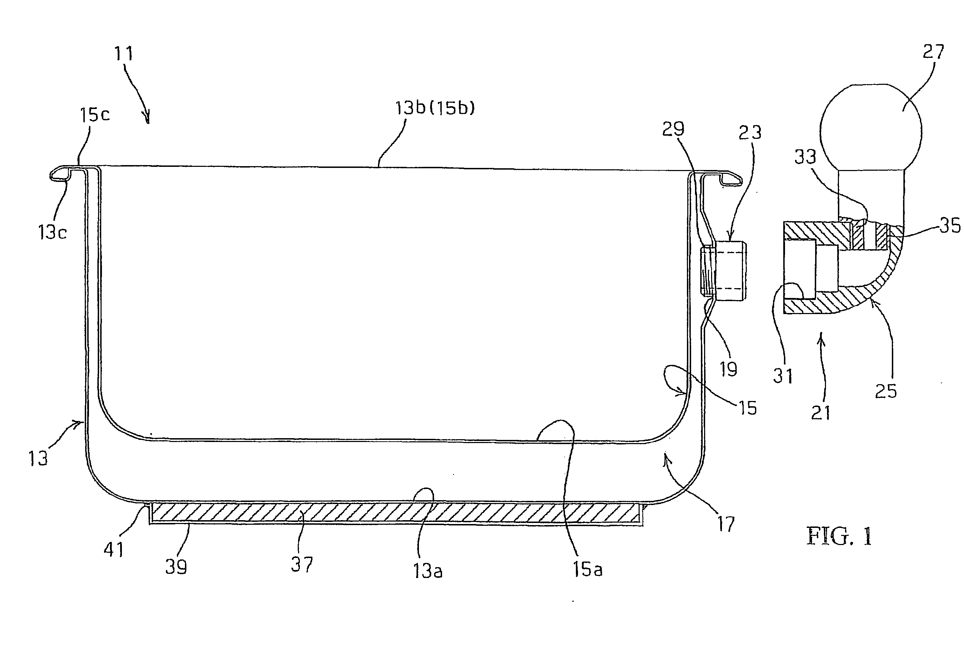

Referring to Fig. 1, the vessel according to the invention, generally denoted 11, comprises an outer first body 13 and an inner second body 15. Said bodies 13, 15 are cylindrical and have a closed bottom 13a, 15a, respectively, and an opening 13b, 15b, respectively, on the opposite base. A hollow space 17 is defined between said bodies 13, 15 and extends, preferably without interruptions, along the bottom and the walls of vessel 11.

In correspondence of their respective openings 13b, 15b, outer body 13 and inner body 15 have circumferential edges 13c, 15c extending radially outwards from vessel 11 and partially overlapping each other in order to close hollow space 17.

Outer body 13 laterally has a hole 19 for a device 21 controlling pressure inside hollow space 17, said device being shown partially disassembled in the Figure.

Device 21 substantially comprises a bushing 23, an L-shaped connector 25 and a valve 27.

Bushing 23, preferably cylindrical and made of brass, has a threaded portion 29 for screwing and securing bushing 23 into hole 19 of outer body 13. In order to ensure the required tightness of bushing 23 in hole 19 and to firmly lock bushing 23 in hole 19, according to the invention a layer of adhesive material is applied between threaded portion 29 and the edge defining hole 19.

L-shaped connector 25, which substantially acts as a support for valve 27, includes a cylindrical seat 31 where the body of bushing 23 is received, upon application of a layer of adhesive in order to ensure the required tightness.

Advantageously, thanks to the described arrangement, mounting of device 21 is quick and simple, and connector 25 can be firmly secured in the correct position so that valve 27 is correctly oriented upwards.

Actually, according to the invention, bushing 23 can be tightly screwed into hole 19, since the final orientation of the bushing is of no relevance in order to ensure the correct arrangement of valve 27. On the contrary, connector 25 is secured to bushing 23 by gluing thanks to the layer of adhesive material, thereby allowing the desired arrangement of connector 25 ensuring the correct orientation of valve 27.

Valve 27, which may be of a known type comprising a mass sliding in an axial chamber when raised by the steam pressure, is secured to connector 25 by screwing threaded portion 33 into the corresponding seat 35 provided in connector 25.

In this manner, valve 27 can be easily manually removed by the user when the water level inside hollow space 17 is to be restored, and can be as easily mounted again before vessel 11 is used for cooking food.

Similarly, should replacement of connector 25 be necessary, it will be possible to take off said connector 25 from bushing 23, preferably upon heating the glued area in order to make detachment of the adhesive easier.

Equally similarly, it will be also possible to replace bushing 23 of device 21 by unscrewing it from hole 19 of outer body 13, preferably upon heating in order to make detachment of the adhesive easier.

Still with reference to Fig. 1, bottom 13a of outer body 13 has associated therewith an aluminium disc 37. Advantageously, said aluminium disc 37 is enclosed in a capsule 39 defining the bearing surface of vessel 11.

Aluminium disc 37 has a thickness in the range 3 to 10 mm, preferably of about 6 mm.

Capsule 39 is preferably secured to bottom 13a of outer body 13 by welding along perimeter 41 between the peripheral edge of capsule 39 and the outer surface of bottom 13a of outer body 13.

Advantageously, capsule 39 is made of steel with high ferrite content, for instance AISI 430 steel, so that vessel 11 can be used also in conjunction with induction cooking devices.

Actually, as known, for the correct operation of induction plates use is required of vessels, preferably with flat bottom, made of steel with high ferrite content, such as for instance AISI 410 (C≤ 0.15) and AISI 430 (C≤ 0.12) steel.

The provision of disc 37 of aluminium, i.e. of a cheap and light material, interposed between capsule 39 and body 13 ensures an optimum heat conduction between capsule 39 and body 13 and a uniform and perfectly controllable cooking.

However, vessels could be envisaged in which a capsule 39 of a material with high ferrite content is still provided, but the aluminium disc is lacking or is made of a different material.

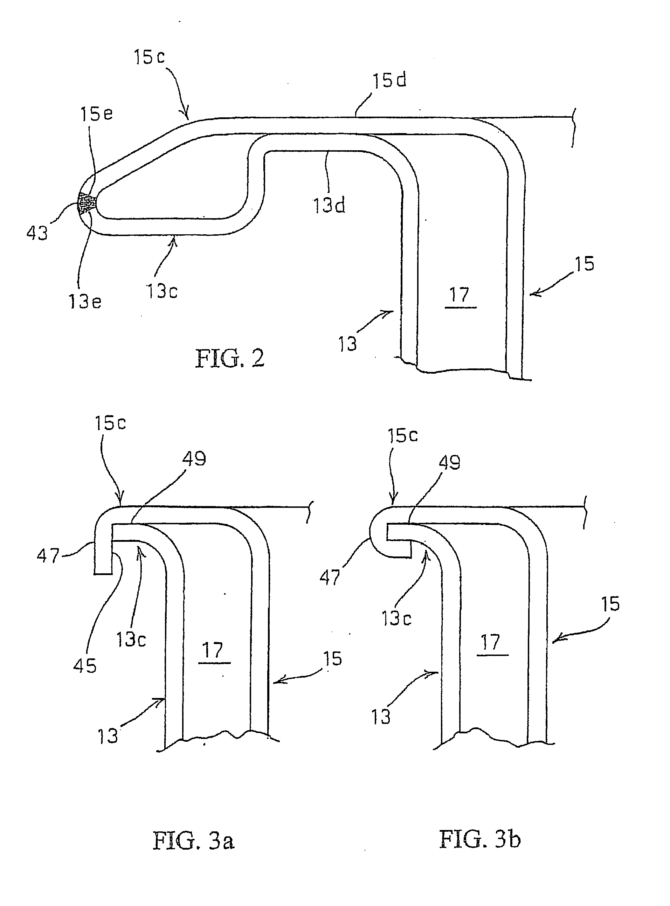

Turning to Fig. 2, the joining area of edges 13c, 15c is shown in greater detail, with reference to a first embodiment of the invention.

In that embodiment, edges 13c, 15c partially overlap each other along a corresponding portion 13d, 15d and are tapered towards the outside of vessel 11, so as to define a joining area 13e, 15e, respectively, where the weld material will be deposited, preferably according to the TIG (Tungsten Inert Gas) technology, thereby defining welding bead 43.

Advantageously, joining areas 13e, 15e define a corresponding circumferential groove that is filled by TIG welding bead 43, thereby forming a corresponding blunt and smooth peripheral edge, perfectly connected to joining areas 13e, 15e.

Turning to Figs. 3a and 3b, a second embodiment is shown which does not form part of the invention such as defined by the claims, where edges 13c, 15c are joined together by crimping preceded by gluing.

Fig. 3a shows the configuration taken by edges 13c, 15c after cold forming in a suitable die in order to define the corresponding edges 13c, 15c closing hollow space 17. Edge 15c of inner body 15 is bent to an L shape and it defines a corresponding internal abutment surface 45 for edge 13c of the outer body.

Referring to Fig. 3b, it can be appreciated that, by a further cold forming operation, portion 47 of edge 15c is folded under edge 15c so as to obtain the crimping of the latter.

Advantageously, a layer of adhesive, denoted 49 in the Figure, is provided between the adjoining surfaces of edges 13c, 15c.

Manufacturing of the vessel according to the invention is substantially carried out in the following manner.

Outer and inner bodies 13, 15 are preferably made by cold forming sheet steel suitable for use with food, for instance of the AISI 304 type with a thickness of about 1.0 mm and preferably below 1.0 mm.

A side hole 19 for pressure adjusting device 21 is then pierced in outer body 13.

A capsule 39 of steel with high ferrite content, enclosing an aluminium disc 37, is then applied, preferably welded, onto the outer surface of the bottom of the outer body.

Advantageously, outer and inner bodies 13, 15 are joined together along the respective top edges 13c, 15c by TIG welding. In the alternative, which does not form part of the invention such as defined by the claims, joining of edges 13c, 15c takes place by crimping, upon deposition of adhesive along the edges of the contacting surfaces.

Vessel 11 is then subjected to a polishing step.

Securing of pressure adjusting device 21 takes place in the following manner.

Bushing 23 is screwed into hole 19 provided in outer body 13 of vessel 11, upon deposition of an adhesive that, once hardened, locks bushing 23 in hole 19 and ensures the required tightness with the edge of said hole 19.

Subsequently, connector 25 is secured to bushing 23, also in this case upon application of an adhesive.

Then, steam adjusting valve 27 is mounted, preferably screwed, into connector 25.

The adhesive used for gluing circumferential edges 13c, 15c of bushing 23 and connector 25 is preferably an adhesive suitable for gluing threaded parts and cylindrical components, resistant to high temperatures and resistant to corrosion, for instance an anaerobic adhesive with quick hardening and high mechanical resistance.

Of course, the vessel according to the invention can be manufactured in any size and even with non-circular cross-sectional shape, e.g. a square, oval ... shape.

## Claims

1. A method of manufacturing a vessel (11) for cooking food, said vessel comprising an outer first body (13) and an inner second body (15), which have both a closed bottom (13a, 15a) and a corresponding opening (13b, 15b) on the opposite base and define therebetween a hollow space (17) associated with a pressure controlling device (21), said first and second bodies (13, 15) having respective circumferential edges (13c, 15c) that extend radially outwards from the vessel (11) and at least partially overlap each other so as to close said hollow space (17), said circumferential edges (13c, 15c) being joined by welding in order to close the hollow space (17), the method being **characterised in that** said edges (13c, 15c) are tapered towards the outside of vessel (11), so as to define a joining area (13e, 15e), respectively, where the weld material will be deposited, thereby defining a corresponding welding bead (43).

2. The method as claimed in claim 1, wherein said welding is performed according to the TIG technique.

3. The method as claimed in claim 1 or 2, wherein a corresponding circumferential groove is defined in said joining area (13e, 15e).

4. The method as claimed in claim 1, comprising piercing a hole in the outer body (13) for securing the pressure adjusting device (21).

5. The method as claimed in claim 1, comprising applying a capsule (39) of a material with high ferrite content onto the outer surface of the bottom (13a) of the outer body (13).

6. The method as claimed in claim 5, wherein said material with high ferrite content is AISI 410 or AISI 430 steel.

7. The method as claimed in claim 5 or 6, wherein said capsule (39) is applied by welding.

8. The method as claimed in claim 5 or 6 or 7, comprising enclosing an aluminium disc (37) into said capsule (39).

9. The method as claimed in any of claims 1 to 8, wherein the application of the pressure adjusting device (21) comprises the steps of:
- screwing a bushing (23) into a hole (19) provided in the outer body (13) of the vessel (11), upon deposition of a layer of adhesive;
- hardening said adhesive so that the bushing (23) becomes locked in the hole (19) and the required tightness is ensured;
- securing an L-shaped connector (25) to the bushing (23), upon application of a layer of adhesive;
- hardening said adhesive so that said connector (25) becomes secured to said bushing (23);
- mounting a steam adjusting valve (27) onto the connector (25).

10. The method as claimed in claim 9, wherein the valve (27) has a threaded portion (33) and is removably secured to the connector (25) by screwing said threaded portion (33) into a corresponding seat (35) provided in the connector (25).

11. The method as claimed in claim 9, wherein said adhesive is an adhesive suitable for gluing threaded parts and cylindrical components, resistant to high temperatures and resistant to corrosion.

12. The method as claimed in claim 11, wherein said adhesive is a quick-hardening anaerobic adhesive.

13. A vessel (11) for cooking food manufactured by the method as claimed in any of claims 1 to 12.

14. The vessel as claimed in claim 13, wherein said vessel is a vessel for cooking food by exploiting the so-called principle of indirect steaming with automatic temperature control.

## Patentansprüche

1. Verfahren zur Herstellung eines Nahrungsmittelgargefäßes (11), wobei dieses Gefäß einen ersten, äußeren Körper (13) sowie einen zweiten, inneren Körper (15), die beide einen geschlossenen Boden (13a, 15a) und eine entsprechende Öffnung (13b, 15b) an der gegenüberliegenden Basis aufweisen und dazwischen einen einer Druckregelungsvorrichtung (21) zugeordneten ersten Hohlraum (17) bilden, wobei dieser erste und zweite Körper (13, 15) entsprechende umlaufende Ränder (13c, 15c) haben, die von dem Gefäß (11) radial nach außen erstrecken und sich mindestens teilweise überlappen, sodass sie diesen Hohlraum (17) schließen, wobei diese umlaufenden Ränder (13c, 15c) durch Schweißen miteinander verbunden sind, um den Hohlraum (17) zu schließen, wobei das Verfahren **dadurch gekennzeichnet ist, dass** diese Ränder (13c, 15c) sich nach außen des Gefäßes (11) verjüngen, sodass sie jeweils einen Verbindungsbereich (13e, 15e) bilden, wo das Schweißmaterial abgelagert werden wird, wodurch es eine entsprechende Schweißnaht (43) bilden wird.

2. Verfahren nach Anspruch 1, wobei dieses Schweißen nach der TIG Technik durchgeführt wird.

3. Verfahren nach Anspruch 1 oder 2, wobei ein entsprechender umlaufender Nut in diesem Verbindungsbereich (13e, 15e) vorgesehen ist.

4. Verfahren nach Anspruch 1, umfassend das Bohren einer Bohrung in den äußeren Körper (13), um die Druckregelungsvorrichtung (21) zu befestigen.

5. Verfahren nach Anspruch 1, umfassend das Anbringen einer Kapsel (39) aus einem Material mit hohem Ferritinhalt auf die Außenfläche des Bodens (13a) des äußeren Körpers (13).

6. Verfahren nach Anspruch 5, wobei dieses Material mit hohem Ferritinhalt Stahl AISI 410 oder Stahl AISI 430 ist.

7. Verfahren nach Anspruch 5 oder 6, wobei diese Kapsel (39) durch Schweißen angebracht wird.

8. Verfahren nach Anspruch 5 oder 6 oder 7, umfassend das Einschließen einer Aluminiumscheibe (37) in diese Kapsel (39).

9. Verfahren nach einem der Ansprüche 1 bis 8, wobei das Anbringen der Druckregelungsvorrichtung (21) die folgenden Schritte umfasst:
- eine Hülse (23) in eine in dem äußeren Körper (13) des Gefäßes (11) vorgesehene Bohrung (19) einzuschrauben, unter Aufbringung einer Klebstoffschicht;
- diesen Klebstoff aushärten zu lassen, sodass die Hülse (23) in der Bohrung (19) geklemmt wird und die gewünschte Dichtigkeit gewährleistet wird;
- ein L-förmiges Verbindungselement (25) an der Hülse (23) zu befestigen, unter Aufbringung einer Klebstoffschicht;
- diesen Klebstoff aushärten zu lassen, sodass dieses Verbindungselement (25) an dieser Hülse (23) befestigt wird;
- ein Dampfregelungsventil (27) an dem Verbindungselement (25) anzubringen.

10. Verfahren nach Anspruch 9, wobei das Ventil (27) einen Gewindeabschnitt (33) aufweist und entfernbar an dem Verbindungselement (25) befestigt wird, indem dieser Gewindeabschnitt in eine in dem Verbindungselement (25) vorgesehene entsprechende Aufnahme (35) eingeschraubt wird.

11. Verfahren nach Anspruch 9, wobei dieser Klebstoff ein zum Kleben von Gewindeteilen und zylindrischen Bestandteilen geeigneter Klebstoff ist, der hochtemperaturbeständig sowie korrosionsbeständig ist.

12. Verfahren nach Anspruch 11, wobei dieser Klebstoff ein schnellhärtender anaerobischer Klebstoff ist.

13. Nahrungsmittelgargefäß (11) hergestellt durch das Verfahren nach einem der Ansprüche 1 bis 12.

14. Gefäß nach Anspruch 13, wobei dieses Gefäß ein Nahrungsmittelgargefäß, das das sogenannte Prinzip der indirekten Dämpfung mit automatischer Temperatursteuerung anwendet.

## Revendications

1. Procédé de fabrication d'un récipient (11) pour la cuisson d'aliments, ledit récipient comprenant un premier corps extérieur (13) et un deuxième corps intérieur (15), qui ont tous les deux un fond fermé (13a, 15a) et une ouverture correspondante (13b, 15b) sur la base opposée et qui définissent entre eux un espace creux (17) associé à un dispositif de réglage de la pression (21), lesdits premier et deuxième corps (13, 15) ayant bords circonférentiels respectifs (13c, 15c) qui s'étendent radialement vers l'extérieur à partir du récipient (11) et qui se chevauchent au moins partiellement l'un l'autre de manière à fermer ledit espace creux (17), lesdits bords périphériques (13c, 15c) étant reliés par soudage afin de fermer ledit espace creux (17), ledit procédé étant **caractérisé en ce que** lesdits bords (13c, 15c) sont effilés vers l'extérieur du récipient (11) de façon à définir une zone de jonction (13e, 15e), respectivement, où le matériau de soudage sera déposé, en définissant ainsi un correspondant cordon de soudure.

2. Procédé selon la revendication 1, dans lequel ledit soudage est réalisé selon la technique TIG.

3. Procédé selon la revendication 1 ou 2, dans lequel une rainure circonférentielle correspondante est définie dans ladite zone de jonction (13e, 15e).

4. Procédé selon la revendication 1, comprenant l'étape de percer un trou dans le corps extérieur (13) pour fixer le dispositif de réglage de la pression (21).

5. Procédé selon la revendication 1, comprenant l'étape d'appliquer sur la surface extérieure du fond (13a) du corps extérieur (13) une capsule (39) en un matériau à haute teneur en ferrite.

6. Procédé selon la revendication 5, dans lequel ledit matériau à haute teneur en ferrite est acier AISI 410 ou AISI 430.

7. Procédé selon la revendication 5 ou 6, dans lequel ladite capsule (39) est appliquée par soudage.

8. Procédé selon la revendication 5 ou 6 ou 7, comprenant l'étape de renfermer un disque en aluminium (37) dans ladite capsule (39).

9. Procédé selon l'une quelconque des revendications 1 à 8, dans lequel l'application du dispositif de réglage de la pression (21) comprend les étapes consistant à:
- visser une douille (23) dans un trou (19) ménagé dans le corps extérieur (13) du récipient (11), après déposition d'une couche d'adhésif;
- faire durcir ledit adhésif de telle sorte que la douille (23) devient bloquée dans le trou (19) et l'étanchéité requise est assurée;
- fixer un connecteur en forme de L (25) à la douille (23), après application d'une couche d'adhésif;
- faire durcir ledit adhésif de telle sorte que ledit connecteur (25) devient fixé à ladite douille (23);
- monter une soupape de réglage de vapeur (27) sur le connecteur (25).

10. Procédé selon la revendication 9, dans lequel la soupape (27) comporte une partie filetée (33) et elle est fixée de manière amovible au connecteur (25) par vissage de ladite partie filetée (33) dans un siège correspondant (35) prévu dans le connecteur (25).

11. Procédé selon la revendication 9, dans lequel ledit adhésif est un adhésif approprié pour le collage de pièces filetées et des composants cylindriques, résistant aux températures élevées et résistant à la corrosion.

12. Procédé selon la revendication 11, dans lequel ledit adhésif est un adhésif anaérobie à durcissement rapide.

13. Récipient (11) pour la cuisson d'aliments fabriqué par le procédé selon l'une quelconque des revendications 1 à 12.

14. Récipient selon la revendication 13, dans lequel ledit récipient est un récipient pour la cuisson d'aliments exploitant le principe dit "à vapeur indirecte" avec contrôle automatique de la température.
